## Europäisches Patentamt
### European Patent Office
### Office européen des brevets

(11) Veröffentlichungsnummer: **0 129 677**
**A2**

(12) **EUROPÄISCHE PATENTANMELDUNG**

(21) Anmeldenummer: **84104888.7**

(22) Anmeldetag: **02.05.84**

(51) Int. Cl.⁴: **B 23 B 39/16**
**B 23 B 39/02**

(30) Priorität: **24.06.83 DE 3322877**

(43) Veröffentlichungstag der Anmeldung:
**02.01.85 Patentblatt 85/1**

(84) Benannte Vertragsstaaten:
**CH FR GB IT LI**

(71) Anmelder: **MAHO WERKZEUGMASCHINENBAU BABEL
& CO.
Postfach 1280
D-8962 Pfronten(DE)**

(72) Erfinder: **Babel, Werner
Achweg 19
D-8962 Pfronten-Meilingen(DE)**

(74) Vertreter: **Patentanwälte Beetz sen. - Beetz jun. Timpe -
Siegfried - Schmitt-Fumian
Steinsdorfstrasse 10
D-8000 München 22(DE)**

(54) **Bearbeitungszentrum für Fräs- und Bohrarbeiten.**

(57) Gegenstand der Erfindung ist ein Bearbeitungszentrum für Fräs- und Bohrarbeiten, bestehend aus einem an einem Ständer horizontal längsverfahrbaren Spindelstock (6), einem vertikal und quer zur Spindelstockachse horizontal verfahrbaren Tischschlitten (17), aus einem Werkzeugmagazin (27, 28) und aus einer Vorrichtung (35) zum automatischen Werkzeugwechsel. Zur Steigerung der Durchsatzleistung eines solchen Bearbeitungszentrums ohne übermäßigen zusätzlichen Aufwand sind gemäß der Erfindung in mindestens einem Spindelstock (6) mehrere horizontale Hauptspindeln (10 bis 13) achsparallel angeordnet und synchron von einem gemeinsamen Hauptantrieb (8, 9) angetrieben, wobei auf dem horizontal und vertikal verfahrbaren Tischschlitten (17) mindestens ein Drehtisch zur Aufnahme von einem oder mehreren Werkstücken angeordnet ist und die Vorrichtung (35) zum automatischen Werkzeugwechsel gleichzeitig je ein Werkzeug pro Hauptspindel aufnehmen und wechseln kann.

./...

EP 0 129 677 A2

0129677

MAHO Werkzeugmaschinenbau Babel & Co.

D-8962 Pfronten

-------------------------------------------

Bearbeitungszentrum für Fräs- und Bohrarbeiten

Die Erfindung betrifft ein Bearbeitungszentrum für Fräs- und Bohrarbeiten, bestehend aus einem am Maschinenständer horizontal längsverfahrbaren Spindelstock, einem vertikal und quer zur Spindelstockachse horizontal verfahrbaren Tischsupport, aus einem Werkzeugmagazin und aus mindestens einer Vorrichtung zum automatischen Werkzeugwechsel.

Derartige Bearbeitungszentren finden in der Regel in der Großserien-Produktion bei der mehrstufigen automatischen Bearbeitung von Werkstücken Anwendung, wobei aufgrund des hohen Grades an Automation an den jeweils zugeführten und eingespannten Werkstücken mehrere Fräs- und Bohrvorgänge in jeweils unterschiedlichen Werkstück-Positionen durchgeführt werden. Obgleich aufgrund dieses wei-

112-(x 2227)-Sd-E

0129677

testgehend automatisierten Ablaufes verschiedenster Handhabungs- und Bearbeitungsvorgänge die Leistung eines derartigen Maschinenzenters erheblich über derjenigen von normalen NC-gesteuerten Fräs- und Bohrmaschinen liegt, finden weitere Leistungssteigerungen doch in der Aufeinanderfolge der verschiedenen Bearbeitungsvorgänge ihre Grenzen.

Aufgabe der Erfindung ist es, ein Bearbeitungszentrum für Fräs- und Bohrarbeiten der angegebenen Gattung zu schaffen, dessen Bearbeitungsleistung gegenüber herkömmlichen Maschinen um ein Mehrfaches erhöht ist.

Erfindungsgemäß wird diese Aufgabe dadurch gelöst, daß im Spindelstock mehrere horizontale Hauptspindeln achsparallel zueinander angeordnet sind, daß auf dem Tischsupport mindestens ein Drehtisch angeordnet und zur Aufnahme mindestens eines Werkstückes ausgebildet ist, und daß die Vorrichtung zum Werkzeugwechsel zur gleichzeitigen Aufnahme und Übergabe je eines Werkzeuges pro Hauptspindel ausgebildet ist.

Durch die achsparallele Anordnung von mehreren Hauptspindeln im Spindelstock ergibt sich die Möglichkeit, gleichzeitig eine der Anzahl an Hauptspindeln entsprechende Zahl von Werkstücken zu bearbeiten, die auf den Werkstück-Drehtischen in geeigneter Anzahl und mit geeigneten Zwischenabständen positioniert werden.

In zweckmäßiger Ausgestaltung können im Spindelstock zwei Hauptspindeln achsparallel und senkrecht übereinander angeordnet werden. In diesem Falle wird für die Bearbeitung nur ein einziger Drehtisch benötigt, auf dem jeweils zwei Werkstücke senkrecht übereinander in einem dem Abstand der Hauptspindeln entsprechenden vertikalen Abstand angeordnet werden. Das Werkzeugmagazin kann als Kettenmagazin ausgebildet seitlich am Maschinenständer angeordnet werden und die Vorrichtung zum Werkzeugwechsel weist vier Greifer für einen gleichzeitigen Werkzeugwechsel der beiden Hauptspindeln auf. Diese Wechselvorrichtung ist in Längsrichtung des Spindelstockes verschiebbar ausgebildet, um mit jeweils zwei Greifern die beiden Werkzeuge aus ihrem Sitz in der Hauptspindel zu lösen und zwei neue, gleiche Werkzeuge dem Kettenmagazin zu entnehmen. Durch eine halbe Umdrehung des Werkzeugwechslers in seinem ausgefahrenen Zustand um die zur Spindellängsachse um 45° geneigte Wechselachse kommen die neuen Werkzeuge vor die Hauptspindeln und gleichzeitig die gebrauchten Werkzeuge vor die entsprechenden Aufnahmen des Kettenmagazins. Eine Rückbewegung des Werkzeugwechslers in Längsrichtung des Spindelstockes führt zum gleichzeitigen Einsetzen der neuen Werkzeuge in die Hauptspindeln und der gebrauchten Werkzeuge in die Magazin-Aufnahmen.

Bei dem Bearbeitungszentrum gemäß der Erfindung können im Spindelstock auch zwei Hauptspindeln in einem gemeinsamen oder in zwei achsparallelen Spindelstöcken horizontal nebeneinander angeordnet werden. Um in gleicher Weise wie bei der vorstehend erörterten Ausführung gleichzeitig zwei Werkstücke in drei Achsen bearbeiten zu können, können zwei Drehtische nebeneinander auf dem Tischsupport montiert sein, wobei der horizontale Abstand der beiden tischzentren dem horizontalen Abstand der beiden Hauptspindeln entspricht. Das Werkzeugmagazin kann in Form einer Kette, eines Tellers oder eines anderen geeigneten Speichers auf dem Spindelstock montiert sein und die vier Greifer aufweisende Werkzeugwechsel-Vorrichtung ist in

- 4 -

0129677

Längsrichtung des Spindelstockes verschiebbar sowie um ihre vertikal um 45° zur Spindelstocklängsachse geneigte Längsachse um jeweils 180° verdrehbar. Diese Ausführung zeichnet sich durch eine relativ hohe Steifigkeit und Führungsgenauigkeit aus, weil die Führungsleisten aufgrund der relativ großen Breite des Spindelstockes einen weiten horizontalen Zwischenabstand haben.

Eine hinsichtlich der Bearbeitungsleistung besonders zweckmäßige Weiterbildung des Bearbeitungszentrums gemäß der Erfindung zeichnet sich dadurch aus, daß in einem oder zwei Spindelstöcken insgesamt vier Hauptspindeln mit gleichem vertikalen und horizontalen Abstand angeordnet sind, wobei auf dem Tischsupport mindestens zwei Drehtische nebeneinander in einem Mittelachs-Abstand angeordnet sind, welcher dem horizontalen Abstand der Hauptspindelachsen entspricht. Jeder Drehtisch ist zur Aufnahme von zwei Werkstücken senkrecht übereinander ausgebildet. An jeder Seite des Spindelstockes ist ein Werkzeugmagazin und eine Vorrichtung zum Werkzeugwechsel vorgesehen. Mit einem in dieser Weise ausgestatteten Bearbeitungszentrum können jeweils vier Werkstücke gleichzeitig bearbeitet und die jeweils notwendigen Werkzeuge in einem gleichen Wechselvorgang ausgetauscht werden. Es kann auch bei dieser Ausführung nur ein einziger Drehtisch von entsprechend größeren Abmessungen eingesetzt werden, der jedoch eine Bearbeitung nur von zwei Seiten aus gestattet.

Weitere zweckmäßige Ausgestaltungen des erfindungsgemäßen Bearbeitungszentrums sind Gegenstand zusätzlicher Unteransprüche.

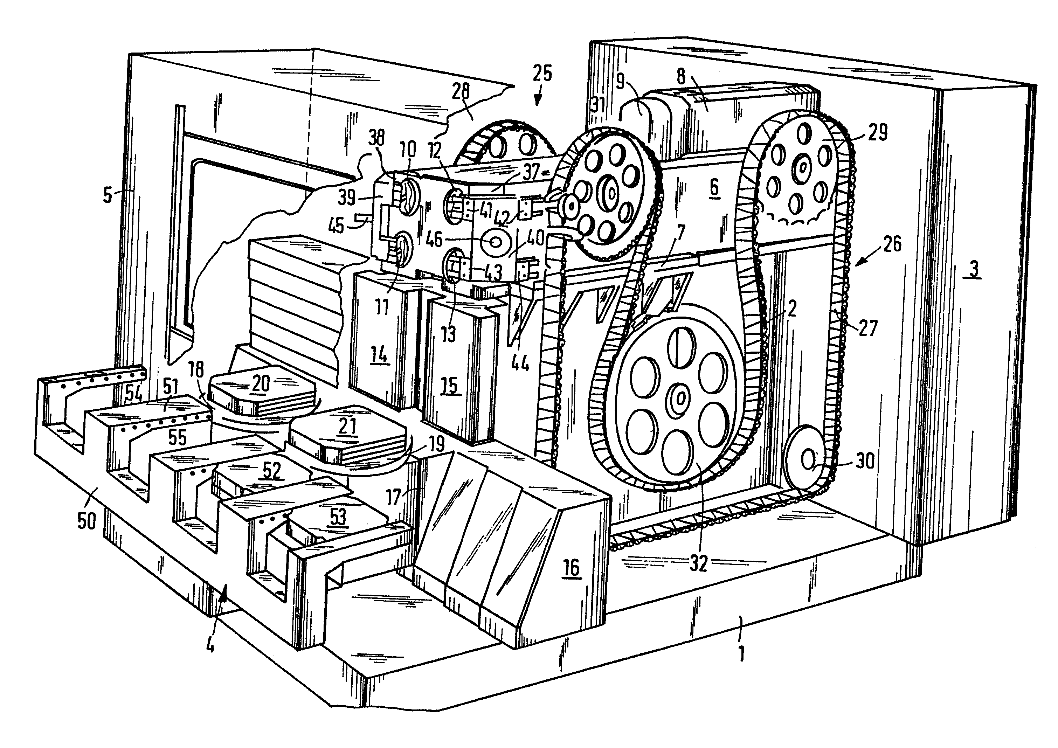

Im folgenden wird ein in der Zeichnung perspektivisch dargestelltes Ausführungsbeispiel des erfindungsgemäßen Bearbeitungszentrums ausführlich beschrieben.

Auf einer durchgehenden Basis 1 sind ein Maschinenständer 2, ein Schaltschrank 3, eine Paletten-Übergabe 4 und ein Kapselgehäuse 5 mit Fenstern angeordnet. Auf der planen Oberfläche des Maschinenständers ist ein Spindelstock 6 in Führungsleisten 7 in Richtung seiner Längsachse horizontal verfahrbar angeordnet, der in seinem hinteren Endabschnitt einen Hauptantrieb 8 mit Getriebe 9 trägt. Im Spindelstock 6 sind vier Hauptspindeln 10 bis 13 mit gleichen vertikalen und horizontalen Zwischenabständen neben- und übereinander angeordnet, die gemeinsam und synchron vom Hauptantrieb 8, 9 angetrieben werden. An der Vorderseite des Ständers 2 unterhalb des Spindelstockes befinden sich stabile und verwindungssteife Vertikalführungen 14, 15, an denen ein Tischsupport 16 vertikal verschiebbar geführt ist. Dieser Tischsupport 16 trägt an seiner vorderen Stirnseite einen Werkstückschlitten 17, auf dem zwei Drehtische 18, 19 mit einem Achsabstand angeordnet sind, welcher dem Achsabstand der Hauptspindeln 11, 13 bzw. 10, 12 genau entspricht. Dies bedeutet, daß die Achsen der Spindeln 10, 11 und 12, 13 die Hochachsen der Drehtische 18 bzw. 19 schneiden. Auf jedem Drehtisch 18 und 19 ist eine Palette 20, 21 zentrisch aufgespannt, welche jeweils zwei senkrecht übereinander angeordnete - nicht dargestellte - Werkstücke tragen.

Wie ersichtlich, befindet sich an jeder Längsseite des Maschinenständers 2 ein Werkzeugmagazin 25, 26 in Form einer Magazinkette 27, 28, von denen jede über Zahnscheiben 29 bis 32 geführt ist. Beide Magazinketten 27 und 28 sind genau gleich ausgebildet und werden synchron angetrieben. In vorgegebenen Abständen sind in diesen Magazinketten jeweils gleich ausgebildete Werkzeuge für die Hauptspindeln 10, 11 bzw. 12, 13 angeordnet, die durch zwei Wechselvorrichtungen 39, 40 gleichzeitig ein- bzw. ausgebaut werden können.

Diese Werkzeugwechselvorrichtungen 39, 40 weisen senkrechte Tragplatten 37, 38 auf, die unter einem Horizontal-Winkel von 45° zur Spindelstock-Längsachse verlaufen. Beide Tragplatten 39, 40 sind in Richtung der Spindelstock-Längsachse horizontal verschiebbar. An den Tragplatten 39, 40 befestigte Greiferarme tragen Werkzeuggreifer 41 bis 43, die jeweils paarweise Winkel von 90° einschließen und die zum gleichzeitigen Erfassen der in die Spindeln 12, 13 bzw. 10, 11 eingespannten Werkzeuge sowie nach vorgegebenen Relativbewegungen zum Erfassen entsprechender Werkzeuge in dem Kettenmagazin 26 dienen. Jeder Werkzeugwechsler 40, 41 ist in seiner ausgefahrenen Stellung um seine unter einem Winkel von 45° zur Spindelstock-Längsachse geneigte Mittelachse 45, 46 verdrehbar, so daß durch eine Verschiebung der Werkzeugwechsler 39, 40 in der Spindelstock-Längsachse die "gebrauchten" Werkzeuge aus den Hauptspindeln 10, 11 bzw. 12, 13 und aus dem jeweiligen Magazin gleichzeitig und jeweils paarweise herausgezogen und nach der 180°-Drehung gegen die zuvor aus dem Kettenmagazin 26 entnommenen beiden gleichen Werkzeuge ausgetauscht werden können.

Die automatische Werkstückübergabe 4 umfaßt ein horizontal auf der Basis 1 verschiebbares Traggerüst 50, zwischen dessen gabelförmigen Trägern 51 jeweils zwei Paletten 52, 54 mit - nicht dargestellten - jeweils paarweise übereinander vormortierten Werkstücken aufgenommen sind. Jeweils zwei Paletten-Aufnahmen 54, 55 sind - wie dargestellt - leer und dienen zum Abtransport der beiden Paletten 20, 21 nach Beendigung der Bearbeitungsvorgänge. Um die Breite des Bearbeitungszentrums nicht übermäßig zu vergrößern, sind zum Paletten- bzw. Werkstück-Wechsel der Werkstückschlitten 17 relativ zueinander so verschiebbar, daß beim automatischen Palettenwechsel der Übergaberahmen 50 seitlich nicht zu weit über die Basis 1 hinausfahren muß, was der Fall wäre, wenn nur der Übergaberahmen 50 verfährt und der Tischschlitten 17 mit dem Support 16 horizontal unbeweglich verbunden wäre.

Wie ohne weiteres ersichtlich, besteht bei dem dargestellten Bearbeitungszentrum die Möglichkeit, gleichzeitig vier Werkstücke mit den Hauptspindeln 10 bis 13 zu bearbeiten, wenn diese jeweils zwei und zwei übereinander auf den Paletten 20, 21 starr montiert sind. Es ist offensichtlich, daß der vertikale Abstand der jeweils paarweise übereinander auf einer der Paletten 20 bzw. 21 montierten Werkstücke genau dem vertikalen Abstand der entsprechenden Hauptspindeln 10, 11 bzw. 12, 13 entsprechen muß.

Die Erfindung ist nicht auf das dargestellte und vorstehend beschriebene Ausführungsbeispiel beschränkt. So sind beispielsweise konstruktiv einfachere Ausführungen ohne weiteres möglich, bei denen jeweils nur ein Hauptspindelpaar achsparallel nebeneinander im Spindelstock angeordnet ist, wobei entweder diese beiden Hauptspindeln senkrecht übereinander oder horizontal nebeneinander vorgesehen sein können. Bei der Anordnung zweier Hauptspindeln vertikal übereinander entfällt naturgemäß jeweils ein Drehtisch und eines der am Ständer seitlich angeordneten Werkzeugmagazine mit dem entsprechenden Werkzeugwechsler. Bei der Anordnung von zwei Hauptspindeln horizontal nebeneinander, z. B. der Hauptspindeln 11, 13 gemäß der Zeichnung, kann nur ein einziges
Werkzeugmagazin, insbesondere ein Kettenmagazin, mit
nur einem einzigen Werkzeugwechsler vorgesehen werden,
welches nicht mehr an den Seitenwänden des Ständers,
sondern horizontal oberhalb des Spindelstockes angeordnet wird. Der in diesem Fall benötigte Werkzeugwechsler
entspricht in seinem grundsätzlichen Aufbau den dargestellten Werkzeugwechslern 40, 41, ist jedoch an der
oberen Stirnkante des Spindelstockes montiert, wobei
seine Mittelachse unter einem vertikalen Winkel von
45° zur Spindelstock-Längsachse verläuft. Es können auch
zwei Spindelstöcke achsparallel nebeneinander auf dem
Maschinenständer montiert werden, wobei in jedem entweder eine oder auch zwei Spindeln übereinander angeordnet sein können.

Ein wesentlicher Vorteil des erfindungsgemäßen
Maschinenzenters ergibt sich durch die jeweils paarweise Anordnung der Hauptspindeln bei entsprechender Wahl
ihrer Drehrichtung durch die Möglichkeit einer selbsttätigen Kompensation von Schwingungen und Vibrationen während der Bearbeitungsvorgänge. Der Hauptvorteil der Erfindung liegt jedoch darin, daß bei etwa gleichem Zeit- und
Arbeitsaufwand die doppelte bzw. die vierfache Anzahl an
Werkstücken in einer Maschine bearbeitet werden kann, was
bisher nicht möglich war.

**0129677**

A n s p r ü c h e
-------------------

1. Bearbeitungszentrum für Fräs- und Bohrarbeiten, bestehend aus einem auf einem Maschinenständer horizontal längsverfahrbaren Spindelstock, einem vertikal und quer zur Spindelstockachse horizontal verfahrbaren Tischschlitten, aus mindestens einem Werkzeugmagazin und aus mindestens einer Vorrichtung zum automatischen Werkzeugwechsel,

   d a d u r c h   g e k e n n z e i c h n e t,

   daß in mindestens einem Spindelstock (6) mehrere horizontale Hauptspindeln (10 bis 13) achsparallel angeordnet sind, daß am Tischschlitten (17) mindestens ein Drehtisch (18, 19) zur Aufnahme einer Palette (20, 21) angeordnet ist, und

   daß die Vorrichtung (39;40) zum Werkzeugwechsel zur gleichzeitigen Aufnahme und Übergabe je eines Werkzeuges pro Hauptspindel (10 bis 13) ausgebildet ist.

2. Bearbeitungszentrum nach Anspruch 1, dadurch gekennzeichnet,

112-(x2227)-SdE

daß in/Spindelstock (6) zwei Hauptspindeln (12, 13)
senkrecht übereinander angeordnet sind, daß mindestens
ein auf dem Tischschlitten (17) montierter Drehtisch
(19) zur Aufnahme einer Palette (21) mit jeweils zwei
Werkstücken senkrecht übereinander ausgebildet ist, wobei der Abstand der          Werkstücke dem vertikalen
Abstand der Hauptspindelachsen entspricht, und daß
der am Spindelstock angeordnete Werkzeugwechsler (40)
vier Greifer (41 bis 44) aufweist und in Längsrichtung
des Spindelstockes verschiebbar sowie um seine horizontale, unter 45° zur Spindelstockachse verlaufende Mittelachse verdrehbar ausgebildet ist.

3. Bearbeitungszentrum nach Anspruch 1,
   dadurch gekennzeichnet,
   daß im Spindelstock (6) zwei Hauptspindeln (11, 13)
   horizontal nebeneinander angeordnet sind, daß auf dem
   Tischschlitten (17) mindestens ein Drehtisch (18, 19)
   in einem dem Spindelabstand entsprechenden
   Zwischenabstand angeordnet sind, und daß der oberhalb
   des Spindelstockes angeordnete Werkzeugwechsler vier
   Greifer zum gleichzeitigen Wechsel der Werkzeuge beider
   Hauptspindeln (11, 13) aufweist und in Längsrichtung des
   Spindelstockes (6) verschiebbar sowie um seine vertikal
   um 45° zur Spindelstock-Längsachse geneigte Mittelachse
   um 180° verdrehbar ist.

4. Bearbeitungszentrum nach Anspruch 1,
   dadurch gekennzeichnet,
   daß im Spindelstock (6) insgesamt vier Hauptspindeln
   (10 bis 13) mit gleichem vertikalen und horizontalen Abstand angeordnet sind, daß auf dem Tischschlitten (17)
   mindestens zwei Drehtische (18, 19) mit dem durch die Hauptspindelachsen vorgegebenen horizontalen Abstand angeordnet sind, von denen jeder zur Aufnahme von zwei Werkstücken senkrecht übereinander ausgebildet ist, und daß an jeder Seite des Spindelstockes (6) je ein Werkzeugmagazin (27, 28) sowie ein Werkzeugwechsler vorgesehen ist.

5. Bearbeitungszentrum nach einem der Ansprüche 1 bis 4, dadurch gekennzeichnet, daß die Werkstücke auf Paletten (20, 21, 52, 53) vormontiert sind und daß eine Übergabeeinrichtung (4) zur selbsttätigen Positionierung der Paletten auf den jeweiligen Drehtischen (18, 19) vorgesehen ist.

6. Bearbeitungszentrum nach einem der Ansprüche 1 bis 5, dadurch gekennzeichnet, daß die Drehtisch-Antriebe synchronisiert sind und daß die Hauptspindeln (10 - 13) von einem gemeinsamen Hauptantrieb (8, 9) angetrieben sind.

7. Bearbeitungszentrum nach einem der Ansprüche 1 bis 6, dadurch gekennzeichnet, daß die Werkzeugmagazine als Kettenmagazine (27, 28) mit entsprechend der Greiferpositionierung paarweise gespeicherten Werkzeugen ausgebildet sind.

8. Bearbeitungszentrum nach einem der Ansprüche 1 - 8, dadurch gekennzeichnet, daß mehrere Spindelstöcke achsparallel nebeneinander am Ständer montiert sind, von denen jeder mindestens eine Hauptspindel aufnimmt.